# EUROPEAN PATENT APPLICATION

(11) **EP 4 539 142 A1**
(43) Date of publication of application: **16.04.2025**
(21) Application number: 23860819.4
(22) Date of filing: 28.08.2023
(51) Int. Cl.: H01M 4/134, H01M 4/66, H01M 4/70, H01M 4/38, H01M 4/1395, H01M 4/02

(54) **ANODE FOR SECONDARY BATTERY AND MANUFACTURING METHOD THEREFOR**

(30) Priority: 31.08.2022 KR 20220110407; 28.12.2022 KR 20220187919
(71) Applicant: LG Energy Solution, Ltd., Seoul 07335 (KR)
(72) Inventor: JUNG, Un-Ho, Daejeon 34122 (KR); KIM, Yun-Jung, Daejeon 34122 (KR); LEE, Chang-Hoon, Daejeon 34122 (KR); KIM, Ki-Hyun, Daejeon 34122 (KR); LEE, Keon-Je, Daejeon 34122 (KR)
(74) Representative: Goddar, Heinz J.
(86) International application number: PCT/KR2023/012734
(87) International publication number: WO 2024/049143

(57) **Abstract**

Disclosed is a negative electrode for a secondary battery, including: a carbonaceous current collector; a porous polymer layer disposed on at least one surface of the carbonaceous current collector; and a lithium-based material layer disposed on the top surface of the porous polymer layer. The negative electrode for a secondary battery shows improved elongation, tensile strength and elastic force. In addition, the secondary battery including the negative electrode for a secondary battery shows improved cycle life.

## Description

### TECHNICAL FIELD

The present disclosure relates to a negative electrode for a secondary battery and a method for manufacturing the same. Particularly, the present disclosure relates to a negative electrode for a secondary battery which has excellent rigidity and lithium plating ability, and a method for manufacturing the same.

The present application claims priority to Korean Patent Application No. 10-2022-0110407 filed on August 31, 2022 and Korean Patent Application No. 10-2022-0187919 filed on December 28, 2022 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted, and development of a rechargeable secondary battery has become a focus of attention. Recently, research and development of designing novel electrodes and batteries have been conducted in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Among such secondary batteries, lithium sulfur (LiS) batteries having a high energy density has been spotlighted as next-generation secondary batteries capable of substituting for lithium-ion batteries. A lithium sulfur battery uses a sulfur-based material as a positive electrode active material. In the lithium sulfur battery, reduction of sulfur and oxidation of lithium metal occur during discharge, wherein sulfur forms lithium polysulfide (Li₂S₂, Li₂S₄, Li₂S₆, Li₂S₈) having a linear structure from S₈ having a cyclic structure. Such a lithium sulfur battery is characterized in that it shows a stepwise discharge voltage until polysulfide (PS) is reduced completely into Li₂S.

Lithium metal may be used for a negative electrode of a lithium secondary battery. However, when using lithium metal as a negative electrode, it shows high reactivity with an electrolyte during charge/discharge due to the high reactivity of lithium, and dendrite is formed on the negative electrode surface as charge/discharge cycles are repeated, thereby causing the problems of an increase in electrode thickness and degradation of cycle characteristics and safety. There is another problem in that it is difficult to manufacture a negative electrode from lithium metal due to the low rigidity of lithium metal.

### DISCLOSURE

### Technical Problem

The present disclosure is designed to solve the problems of the related art, and therefore the present disclosure is directed to providing a negative electrode for a secondary battery having improved elongation, rigidity and safety and a method for manufacturing the same, as well as a secondary battery including the negative electrode.

### Technical Solution

In one aspect of the present disclosure, there is provided a negative electrode for a secondary battery according to any one of the following embodiments.

According to the first embodiment of the present disclosure, there is provided a negative electrode for a secondary battery, including:
a carbonaceous current collector; a porous polymer layer disposed on at least one surface of the carbonaceous current collector; and a lithium-based material layer disposed on the top surface of the porous polymer layer.

According to the second embodiment of the present disclosure, there is provided the negative electrode for a secondary battery as defined in the first embodiment, wherein the lithium-based material layer includes at least one of lithium metal and lithium alloys.

According to the third embodiment of the present disclosure, there is provided the negative electrode for a secondary battery as defined in the first or the second embodiment, wherein the lithium-based material layer is a lithium metal layer.

According to the fourth embodiment of the present disclosure, there is provided the negative electrode for a secondary battery as defined in any one of the first to the third embodiments, wherein the porous polymer layer has at least one through-hole formed therein, and the carbonaceous current collector and the lithium-based material layer are adhered with each other through the through-hole.

According to the fifth embodiment of the present disclosure, there is provided the negative electrode for a secondary battery as defined in the fourth embodiment, wherein the through-hole formed in the porous polymer layer occupies an area corresponding to 10-90% based on the total area of the porous polymer layer.

According to the sixth embodiment of the present disclosure, there is provided the negative electrode for a secondary battery as defined in the third or the fourth embodiment, wherein the through-hole formed in the porous polymer layer has a diameter of 0. 5-3 cm.

According to the seventh embodiment of the present disclosure, there is provided the negative electrode for a secondary battery as defined in any one of the first to the sixth embodiments, wherein the porous polymer layer is disposed on both surfaces of the carbonaceous current collector.

According to the eighth embodiment of the present disclosure, there is provided the negative electrode for a secondary battery as defined in any one of the first to the seventh embodiments, wherein the carbonaceous current collector has a specific surface area of 50 m²/g or more.

According to the ninth embodiment of the present disclosure, there is provided the negative electrode for a secondary battery as defined in any one of the first to the eighth embodiments, wherein the carbonaceous current collector has an areal density of 100 g/m² or less.

According to the tenth embodiment of the present disclosure, there is provided the negative electrode for a secondary battery as defined in any one of the first to the ninth embodiments, wherein the carbonaceous current collector layer includes graphite, graphene, carbon nanotubes (CNTs), graphite nanofibers (GNFs), carbon nanofibers (CNFs), activated carbon fibers (ACFs), or two or more of them.

According to the eleventh embodiment of the present disclosure, there is provided the negative electrode for a secondary battery as defined in any one of the first to the tenth embodiments, wherein the porous polymer layer includes polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylenenaphthalate, or two or more of them.

In another aspect of the present disclosure, there is provided a method for manufacturing a negative electrode for a secondary battery according to any one of the following embodiments.

According to the twelfth embodiment of the present disclosure, there is provided a method for manufacturing a negative electrode for a secondary battery, including the steps of: stacking a carbonaceous current collector, a porous polymer layer having at least one through-hole on at least one surface of the carbonaceous current collector, and a lithium-based material layer on the top surface of the porous polymer layer to form a laminate; and compressing the laminate through a pressing process.

According to the thirteenth embodiment of the present disclosure, there is provided the method for manufacturing a negative electrode for a secondary battery as defined in the twelfth embodiment, wherein the lithium-based material layer includes at least one of lithium metal and lithium alloys.

According to the fourteenth embodiment of the present disclosure, there is provided the method for manufacturing a negative electrode for a secondary battery as defined in the twelfth or the thirteenth embodiment, wherein the lithium-based material layer is a lithium metal layer.

According to the fifteenth embodiment of the present disclosure, there is provided the method for manufacturing a negative electrode for a secondary battery as defined in any one of the twelfth to the fourteenth embodiments, wherein the compressing step is carried out at a temperature of 180°C or less.

According to the sixteenth embodiment of the present disclosure, there is provided the method for manufacturing a negative electrode for a secondary battery as defined in any one of the twelfth to the fifteenth embodiments, wherein the lithium-based material layer and the carbonaceous current collector are adhered with each other through the through-hole formed in the porous polymer layer, in the compressing step.

According to still another embodiment of the present disclosure, there is provided a secondary battery according to the following embodiment.

According to the seventeenth embodiment of the present disclosure, there is provided a secondary battery including: a positive electrode; a negative electrode; a separator interposed between the positive electrode and the negative electrode; and an electrolyte, wherein the negative electrode is the negative electrode as defined in any one of the first to the eleventh embodiments.

### Advantageous Effects

According to an embodiment of the present disclosure, it is possible to improve the rigidity of a negative electrode for a secondary battery. Particularly, the present disclosure provides a negative electrode for a secondary battery having improved stability, tensile strength and elongation.

In addition, according to an embodiment of the present disclosure, it is possible to provide a negative electrode plated uniformly with a lithium-based material.

Additionally, according to an embodiment of the present disclosure, it is possible to improve the life of a negative electrode.

Further, the secondary battery including the negative electrode for a secondary battery shows improve cycle life.

In addition, the present disclosure may have various other effects, which will be described in each embodiment, or effects that can be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic sectional view illustrating the negative electrode for a secondary battery according to an embodiment of the present disclosure.
FIG. 2 is a schematic sectional view illustrating the negative electrode for a secondary battery according to an embodiment of the present disclosure.
FIG. 3 is a graph illustrating the tensile strength test result of an Example of the present disclosure.
FIG. 4 is a graph illustrating the tensile strength test result of Comparative Example of the present disclosure.
FIG. 5 is a graph illustrating the cell performance test results of an Example and a Comparative Example of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

It will be further understood that the terms "include" and/or "including", "comprise" and/or "comprising", or "have" and/or "having" when used in this specification, do not preclude the presence of other elements but specify the additional presence of other elements, unless otherwise stated.

In one aspect of the present disclosure, there is provided a negative electrode for a secondary battery, including: a carbonaceous current collector; a porous polymer layer disposed on at least one surface of the carbonaceous current collector; and a lithium-based material layer disposed on the top surface of the porous polymer layer.

According to the related art, lithium metal itself or a laminate of lithium metal with a current collector, such as copper foil, has been used as a negative electrode for a secondary battery. However, when using lithium metal alone as a negative electrode, there are problems in that the negative electrode is brittle and shows low rigidity.

According to the present disclosure, it is possible to improve the elastic force and tensile strength of a negative electrode and to enhance the processability and workability of a negative electrode by using a carbonaceous current collector for the negative electrode. In addition, since a carbonaceous material having current collectability is used additionally as compared to a lithium metal foil negative electrode using lithium metal itself according to the related art, it is possible to improve the discharge capacity of a cell and to stabilize the coulombic efficiency of a cell. In addition, since the carbonaceous current collector has a lower weight as compared to the conventional copper foil current collector, it is possible to significantly reduce a decrease in cell energy density caused by the introduction of the current collector.

In addition, according to the present disclosure, it is possible to further improve the elongation and elastic force of a negative electrode by using a porous polymer layer for the negative electrode. It is also possible to prevent side reactions between the carbonaceous current collector and an electrolyte by inhibiting the carbonaceous current collector from being in contact with a bulk electrolyte. In this manner, it is also possible to improve the life of a cell.

Further, it is possible to improve the tensile strength and elongation by using the porous polymer layer for a negative electrode. In addition, since the tensile strength and elongation of the negative electrode are improved, it is possible to improve the life of the negative electrode and the capacity of a secondary battery and to enhance the stability.

According to an embodiment of the present disclosure, the porous polymer layer may be disposed on at least one side of the carbonaceous current collector, and particularly, on at least one surface of the carbonaceous current collector. In addition, the lithium-based material layer may be disposed at the upper side of the porous polymer layer, and particularly, at least on the top surface of the porous polymer layer.

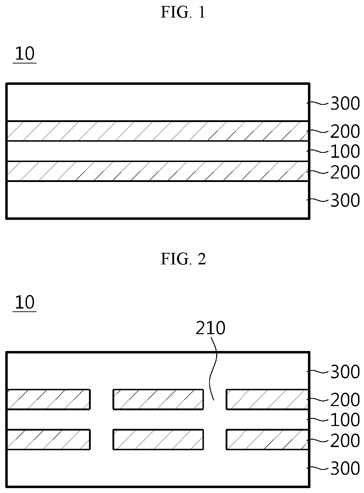

FIG. 1 is a schematic sectional view illustrating the negative electrode 10 for a secondary battery according to an embodiment of the present disclosure.

Referring to FIG. 1, a porous polymer layer 200 is disposed on both surfaces of a carbonaceous current collector 100. In addition, a lithium-based material layer 300 is disposed on the top surface of each porous polymer layer 200.

According to an embodiment of the present disclosure, when the porous polymer layer is disposed on at least one surface of the carbonaceous current collector, the porous polymer layer may be disposed totally on one surface of the carbonaceous current collector, or partially on one surface of the carbonaceous current collector.

According to an embodiment of the present disclosure, the porous polymer layer may be disposed on at least one surface or at least one side of the carbonaceous current collector, while being in direct contact with the carbonaceous current collector, but another layer may be disposed partially or totally between the porous polymer layer and the carbonaceous current collector. For example, lithium metal may be disposed between the carbonaceous current collector and the porous polymer layer.

The lithium-based material layer may be disposed at the upper side of the porous polymer layer, and particularly, on the top surface of the porous polymer layer. More particularly, since the carbonaceous current collector is disposed on the bottom surface of the porous polymer layer, the lithium-based material layer may be disposed on the top surface of the porous polymer layer.

For example, when the porous polymer layer is disposed on one surface of the carbonaceous current collector, the carbonaceous current collector, the porous polymer layer and the lithium-based material layer may be stacked successively. In addition, when the porous polymer layer is disposed on both surfaces of the carbonaceous current collector, a first lithium-based material layer, a first porous polymer layer, a carbonaceous current collector, a second porous polymer layer and a second lithium-based material layer may be stacked successively.

In addition, the lithium-based material layer may be disposed totally on the top surface of the porous polymer layer, but may be disposed partially on the top surface of the porous polymer layer.

According to an embodiment of the present disclosure, the lithium-based material layer includes at least one of lithium metal and lithium alloys. The lithium-based material layer may be a lithium alloy layer or a lithium metal layer. The lithium alloy includes an element capable of forming an alloy with lithium. Herein, the element capable of forming an alloy with lithium may include Si, Sn, C, Pt, Ir, Ni, Cu, Ti, Na, K, Rb, Cs, Fr, Be, Mg, Ca, Sr, Sb, Pb, In, Zn, Ba, Ra, Ge, Al or an alloy thereof.

In the negative electrode for a secondary battery according to an embodiment of the present disclosure, the porous polymer layer may have at least one through-hole formed therein.

The negative electrode for a secondary battery according to the present disclosure may have a structure in which the carbonaceous current collector, the porous polymer layer and the lithium-based material layer are stacked successively. Herein, the adhesion between the carbonaceous current collector and the lithium-based material layer may be higher than the adhesion between the porous polymer layer and the lithium-based material layer used according to the present disclosure. Therefore, at least one through-hole may be formed in the porous polymer layer in order to further improve the adhesion of the laminate so that the carbonaceous current collector may be in direct contact with the lithium-based material layer through the through-hole.

In addition, as described above, the lithium-based material layer and the carbonaceous current collector may be in direct contact with each other through the through-hole, but the through-hole disclosed herein should be differentiated from the pores formed in the porous polymer layer itself.

The porous polymer layer has pores in itself, and at least one pore may perforate one surface of the porous polymer layer so that the surface may be interconnected with the other surface of the porous polymer layer. However, such pores may not be formed in the shortest path from one surface of the porous polymer layer to the other surface thereof, and may pass from one surface of the porous polymer layer to the other surface thereof by way of a complicated path. Therefore, it is difficult to allow the lithium-based material layer and the carbonaceous current collector to be in direct contact with each other through the pores formed in the porous polymer layer itself. On the contrary, the through-hole according to the present disclosure may be perforated and formed separately in the porous polymer layer so that the lithium-based material layer and the carbonaceous current collector layer may be in direct contact with each other.

FIG. 2 is a schematic sectional view illustrating the negative electrode 10 for a secondary battery according to an embodiment of the present disclosure. Referring to FIG. 2, a porous polymer layer 200 having a through-hole 210 perforated therein is disposed on at least one surface of a carbonaceous current collector 100, and a lithium-based material layer 300 is disposed on the top surface of the porous polymer layer having a through-hole 210 perforated therein, thereby forming a laminate. In this manner, the lithium-based material layer 300 and the carbonaceous current collector 100 may be in direct contact and may be adhered with each other through the through-hole 210 formed in the porous polymer layer 200, and thus the interlayer adhesion of the laminate may be retained well.

In the negative electrode for a secondary battery according to an embodiment of the present disclosure, the through-hole formed in the porous polymer layer may be perforated in perpendicular to the porous polymer layer. When the through-hole is perforated in perpendicular to the porous polymer layer, the lithium-based material layer may be in contact with the carbonaceous current collector more efficiently. However, the through-hole formed in the porous polymer layer is not limited to the above-mentioned embodiment, and any through-hole formed in such a manner that the lithium-based material layer and the carbonaceous current collector layer may be in contact with each other efficiently through the through-hole may be allowed.

In the negative electrode for a secondary battery according to an embodiment of the present disclosure, the through-hole formed in the porous polymer layer may have a diameter larger than the diameter of the pores formed in the porous polymer layer. For example, the through-hole may have a diameter of 0.5-3.0 cm, or 1.0-2.0 cm. When the diameter of the through-hole falls within the above-defined range, the lithium-based material layer and the carbonaceous current collector may be adhered with each other through the through-hole, while realizing a sufficient level of adhesion.

The through-hole may have a circular shape, preferably. However, the shape of the through-hole is not limited to a circular shape but may be formed in various shapes, including a quadrangular shape, a triangular shape, or the like. When the through-hole doesn't have a circular shape, the distance between the center of the through-hole and the farthest point therefrom may be 0.25-1.5 cm.

In the negative electrode for a secondary battery according to an embodiment of the present disclosure, the through-holes may be formed in the porous polymer layer with an interval of 0.5-1.5 cm. When the interval of the through-holes satisfies the above-defined range, the lithium-based material layer and the carbonaceous current collector may be adhered with each other while realizing a sufficient level of adhesion.

In the negative electrode for a secondary battery according to an embodiment of the present disclosure, the through-hole may occupy an area of 15-60%, or 20-40%, based on the total area of the porous polymer layer. When the area occupied by the through-hole based on the total area of the porous polymer layer satisfies the above-defined range, it is possible to improve the tensile strength and elongation of the negative electrode and to allow the negative electrode to maintain a suitable level of elastic force and rigidity, while providing the negative electrode laminate with improved interlayer adhesion. The total area refers to the total surface area when the porous polymer layer is observed from the upper side and may cover even an area including the area occupied by the through-hole of the porous polymer layer.

In the negative electrode for a secondary battery according to an embodiment of the present disclosure, the porous polymer layer may have a porosity of 40-70%. When the porosity satisfies the above-defined range, ion conduction may be accomplished smoothly through the porous polymer layer, thereby ensuring a sufficient level of ion conductivity.

In the negative electrode for a secondary battery according to an embodiment of the present disclosure, the carbonaceous current collector may have a specific surface area of 30 m²/g or more, 50 m²/g or more, 80 m²/g or more, or 100 m²/g or more, and 2000 m²/g or less. When the specific surface area of the carbonaceous current collector satisfies the above-defined range, it is possible to ensure a surface area capable of supporting the lithium negative electrode sufficiently and to reduce the current density per unit area, thereby providing an advantage in terms of stabilization of lithium or lithium plating.

In the negative electrode for a secondary battery according to an embodiment of the present disclosure, the carbonaceous current collector may have an areal density of 100 g/m² or less, 70 g/m² or less, 50 g/m² or less, 30 g/m² or less, 15 g/m² or less, or 8 g/m² or less, and 0.1 g/m² or more. When the areal density of the carbonaceous current collector satisfies the above-defined range, it is possible to reduce a decrease in cell energy density caused by the introduction of the current collector. The areal density refers to a value obtained by dividing the weight of the carbonaceous current collector by the surface area (i.e. outer area) thereof assuming that no pores are present in the carbonaceous current collector.

In the negative electrode for a secondary battery according to an embodiment of the present disclosure, the carbonaceous current collector may have a thickness of 3-20 µm, or 5-12 µm. When the thickness of the carbonaceous current collector satisfies the above-defined range, it is possible to provide the negative electrode for a secondary battery according to the present disclosure with a suitable level of elongation, rigidity and elastic force.

In the negative electrode for a secondary battery according to an embodiment of the present disclosure, the carbonaceous current collector may include graphite, graphene, carbon nanotubes (CNTs), graphite nanofibers (GNFs), carbon nanofibers (CNFs), activated carbon fibers (ACFs), or two or more of them. However, the carbonaceous current collector is not limited to the above-listed examples, but any conventional carbonaceous material may be used as the carbonaceous current collector according to the present disclosure.

In the negative electrode for a secondary battery according to an embodiment of the present disclosure, the carbonaceous current collector may have a porous structure in which carbonaceous materials are entangled. For example, the carbonaceous current collector may have a porous carbon nanotube complex structure formed through the entanglement of carbon nanotube strands. In addition, the carbonaceous current collector may be a mat-type current collector forming a free-standing (i.e. self-supported) film. Therefore, the carbonaceous current collector can retain its shape while not being provided with a separate support.

In the negative electrode for a secondary battery according to an embodiment of the present disclosure, a lithium-based material may be supported in the carbonaceous current collector. Particularly, as lithium metal is migrated during the charge/discharge cycles of a secondary battery, at least a part of lithium metal may be supported in the pores of the carbonaceous current collector.

In the negative electrode for a secondary battery according to an embodiment of the present disclosure, the porous polymer layer may have a thickness of 6-20 µm, or 8-12 µm. When the thickness of the porous polymer layer satisfies the above-defined range, it is possible to improve the elongation, tensile strength and elastic force of the negative electrode for a secondary battery.

In the negative electrode for a secondary battery according to an embodiment of the present disclosure, the porous polymer layer may include polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylenenaphthalate, or two or more of them. However, the porous polymer layer is not limited to the above-listed materials, and various materials not described in the specification may be selected and used by those skilled in the art.

In the negative electrode for a secondary battery according to an embodiment of the present disclosure, the lithium-based material layer may have a thickness of 10-80 µm, 10-60 µm, 20-60 µm, 20-40 µm, or 30-50 µm. When the thickness of the lithium-based material layer satisfies the above-defined range, it is possible to ensure a sufficient level of negative electrode capacity.

In another aspect of the present disclosure, there is provided a method for manufacturing a negative electrode for a secondary battery, including the steps of: stacking a carbonaceous current collector, a porous polymer layer having at least one through-hole on at least one surface of the carbonaceous current collector, and a lithium-based material layer on the top surface of the porous polymer layer to form a laminate; and compressing the laminate through a pressing process.

In the method for manufacturing a negative electrode for a secondary battery according to an embodiment of the present disclosure, the compressing step may be carried out at a temperature of 180°C or less, 150°C or less, or 120°C or less, at 20-60°C or at a room temperature of 20-30°C. When the compressing step is carried out within the above-defined temperature range, it is possible to prevent melting of a lithium-based material, such as lithium metal, to inhibit formation of an oxidized layer functioning as resistance in the lithium-based material, and to prevent melting of lithium during the manufacturing process.

In the method for manufacturing a negative electrode for a secondary battery according to an embodiment of the present disclosure, the compressing step may be carried out in a dry environment, such as a dry room. For example, the compressing step may be carried out in such an environment that a dew point of -10°C or less, -30°C or less, or -45°C or less is maintained. When such a condition is satisfied, it is possible to inhibit contamination of the surface of the lithium-based material, such as reaction of the lithium-based material with water and generation of a lithium hydroxide layer.

In the method for manufacturing a negative electrode for a secondary battery according to an embodiment of the present disclosure, the lithium-based material layer and the carbonaceous current collector may be adhered with each other through the through-hole formed in the porous polymer layer in the compressing step. The lithium-based material layer is deformed by compression, is introduced into the through-hole, and is in contact and adhered with the carbonaceous current collector layer.

In still another aspect of the present disclosure, there is provided a secondary battery including: a positive electrode; a negative electrode; a separator interposed between the positive electrode and the negative electrode; and an electrolyte, wherein the negative electrode is the negative electrode for a secondary battery according to the present disclosure.

According to an embodiment of the present disclosure, the secondary battery may be a lithium secondary battery including a lithium metal secondary battery, a lithium-ion secondary battery, a lithium sulfur battery, a lithium polymer secondary battery, a lithium-ion polymer secondary battery, or the like.

According to an embodiment of the present disclosure, the positive electrode may include: a positive electrode current collector; and a positive electrode active material layer formed on at least one surface of the positive electrode current collector.

In general, the positive electrode current collector may have a thickness of about 3-500 µm.The positive electrode current collector is not particularly limited, as long as it has high conductivity while not causing any chemical change in the corresponding battery. Particular examples of the positive electrode current collector include stainless steel, aluminum, nickel, titanium, baked carbon, or aluminum or stainless steel surface-treated with carbon, nickel, titanium, silver, or the like. In addition, the positive electrode current collector may have fine surface irregularities formed on the surface thereof to increase the adhesion of a positive electrode active material. For example, the positive electrode current collector may have various shapes, such as a film, a sheet, a foil, a net, a porous body, a foam or a non-woven web.

The positive electrode active material layer may include a positive electrode active material, a conductive material and a binder polymer.

The positive electrode active material may include sulfur (S). Herein, such a sulfur-containing material is referred to as 'sulfur-based compound'. For example, the sulfur-based compound may include any sulfur-containing compound that can be formed through the reduction of inorganic sulfur (S₈) or oxidation of lithium sulfide (Li₂S). More particularly, the sulfur-based compound may include inorganic sulfur (S₈), lithium sulfide (Li₂S), lithium polysulfide (Li₂Sₓ, x is an integer, 2 ≤ x ≤ 8), disulfide compound, carbon-sulfur polymer ((C₂S_{y})ₙ, y = 2.5-50, n ≥ 2), or two or more of them.

Preferably, the positive electrode active material may be a sulfur-carbon composite. The sulfur-carbon composite may include: a porous carbonaceous material; and a sulfur-based compound supported in/on at least one of the inside of the pores and the external surface of the porous carbonaceous material.

The porous carbonaceous material is not particularly limited, as long as it is a porous material made of carbon, and can support the sulfur-based compound as a positive electrode active material, provide a framework with which the sulfur-based compound can be fixed homogeneously and stably and improve the conductivity of the positive electrode.

In general, the porous carbonaceous material may be obtained by carbonizing precursors made of various carbonaceous materials. The porous carbonaceous material includes irregular pores inside thereof, wherein the pores have an average pore diameter of 1-200 nm, and has a porosity of 10-90 vol% based on the total volume of the porous carbonaceous material. When the average pore diameter is less than the above-defined range, the pore size is merely at a molecular level, and thus the porous carbonaceous material cannot support sulfur. On the contrary, when the average pore diameter is larger than the above-defined range, the porous carbonaceous material shows low mechanical strength and thus is not applicable to the process for manufacturing an electrode.

Herein, 'average pore diameter' may be determined by any method for determining the pore diameter of a porous material known to those skilled in the art, and there is no particular limitation in the method. For example, the pore diameter may be determined by scanning electron microscopy (SEM), field-emission electron microscopy, laser diffraction method or BET (Brunauer-Emmett-Teller) method. For example, the pore diameter may be determined through the laser diffraction method using a commercially available laser diffraction particle size analyzer (e.g. Microtrac MT 3000). In addition, the pore diameter may be determined through the BET method, for example, by using a BELSORP series analyzer available from BEL Japan Co., but is not limited thereto.

The term 'porosity' refers to the ratio of a volume occupied by pores based on the total volume in a structure, is expressed in the unit of '%', and may be used exchangeably with such terms as pore ratio, porous degree, or the like. According to the present disclosure, determination of the porosity is not particularly limited, and for example, the porosity may be determined by the BET method using nitrogen gas or Hg porosimetry and according to ASTM D-2873.

The porous carbonaceous material is not particularly limited in terms of its shape, and any shape, including a spherical shape, a rod-like shape, a needle-like shape, a sheet-like shape, a tubular shape or a bulky shape, used conventionally for a lithium sulfur battery may be used with no particular limitation.

Any porous carbonaceous material may be used, as long as it has a porous structure or a high specific surface area and is used conventionally in the art. Particular examples of the porous carbonaceous material include at least one selected from the group consisting of: graphite; graphene; carbon black, such as denka black, acetylene black, ketjen black, channel black, furnace black, lamp black, thermal black, or the like; carbon nanotubes (CNTs), such as single-walled carbon nanotubes (SWCNTs), multi-walled carbon nanotubes (MWCNTs), or the like; carbon fibers, such as graphite nanofibers (GNFs), carbon nanofibers (CNFs), activated carbon fibers, or the like; graphite, such as natural graphite, artificial graphite, expandable graphite, or the like; and activated carbon, but is not limited thereto. Preferably, the porous carbonaceous material may be carbon nanotubes.

The method for preparing the sulfur-carbon composite is not particularly limited, and any conventional method known to those skilled in the art may be used. For example, a method, including simply mixing sulfur with a porous carbonaceous material and carrying out heat treatment to form a composite, may be used.

The positive electrode active material may further include at least one selected from transition metal elements, Group IIIA elements, Group IVA elements, sulfur compounds of those elements, and alloys of sulfur with those elements.

The transition metals may include Sc, Ti, V, Cr, Mn, Fe, Co, Ni, Cu, Zn, Y, Zr, Nb, Mo, Tc, Ru, Rh, Pd, Os, Ir, Pt, Au, Hg, or the like, Group IIIA elements may include Al, Ga, In, Ti, or the like, and Group IVA elements may include Ge, Sn, Pb, or the like.

The sulfur-carbon composite may be used in an amount of 50 wt% or more based on the total weight of the positive electrode. Particularly, the sulfur-carbon composite may be used in an amount of 80 wt% or more, 90 wt% or more, or 95 wt% or more, based on the total weight of the positive electrode active material. Particularly, the sulfur-carbon composite may be used in an amount of 80-100 wt%, and more particularly, 85-99 wt%, 90-99 wt%, 95-98 wt%, 95-97 wt%, or 96 wt%, based on the total weight of the positive electrode active material.

According to an embodiment of the present disclosure, the binder polymer allows the positive electrode active material to be retained in the positive electrode current collector and organically interconnects the positive electrode active material particles among themselves to enhance the binding force among them, and any binder polymer known to those skilled in the art may be used.

For example, the binder polymer may include any one selected from the group consisting of: polyacrylic acid (PAA); a fluororesin-based binder including polyvinylidene fluoride (PVDF), a polyvinylidene fluoride-based polymer containing at least one vinylidene fluoride unit as a repeating unit, polytetrafluoroethylene (PTFE), or two or more of them; a rubber-based binder including styrene-butadiene rubber (SBR), acrylonitrile-butadiene rubber or styrene-isoprene rubber; an acrylic binder; a cellulose-based binder including carboxymethyl cellulose (CMC), starch, hydroxypropyl cellulose or regenerated cellulose; a polyalcohol-based binder; a polyolefin-based binder including polyethylene or polypropylene; a polyimide-based binder; a polyester-based binder; and a silane-based binder, or a mixture or copolymer of two or more of them.

According to an embodiment of the present disclosure, the content of the binder may be 1-10 wt% based on the total weight of the positive electrode active material layer. When the content of the binder is less than the above-defined range, physical properties of the positive electrode may be degraded to cause separation of the positive electrode active material and the conductive material. When the content of the binder is larger than the above-defined range, the proportion of the positive electrode active material and the conductive material is relatively decreased to cause a decrease in battery capacity. Therefore, a suitable content of the binder is determined preferably within the above-defined range.

According to an embodiment of the present disclosure, the conductive material is a material functioning to connect the positive electrode active material electrically with an electrolyte to provide a path through which electrons are conducted to the positive electrode active material. Any conductive material may be used with no particular limitation, as long as it is an element forming an electrode and differentiated physically from carbon contained in the sulfur-carbon composite and has conductivity.

Particular examples of the conductive material may include: carbon black, such as Super-P, denka black, acetylene black, ketjen black, channel black, furnace black, lamp black, thermal black, or the like; carbon derivatives, such as carbon nanotubes or fullerene; conductive fibers, such as carbon fibers or metal fibers; fluorocarbon; metal powder, such as aluminum, nickel powder, or the like; or conductive polymer, such as polyaniline, polythiophene, polyacetylene, polypyrrole, or the like. Such conductive materials may be used alone or in combination.

According to an embodiment of the present disclosure, the content of the conductive material may be 1-10 wt% based on the total weight of the positive electrode active material. When the content of the conductive material is less than the above-defined range, conduction of electrons between the positive electrode active material and the current collector is not facilitated to cause degradation of voltage and capacity. On the contrary, when the content of the conductive material is larger than the above-defined range, the proportion of the positive electrode active material is relatively reduced to cause a decrease in total energy (quantity of electric charge) of the battery. Therefore, the content of the conductive material is determined preferably within the above-defined range.

According to an embodiment of the present disclosure, the separator functions to separate or insulate the positive electrode and the negative electrode from each other and to allow lithium-ion transport between the positive electrode and the negative electrode and may include a porous non-conductive or insulating material, and any separator may be used with no particular limitation, as long as it is used generally as a separator for a lithium secondary battery. Such a separator may be in independent member, such as a film, or a coating layer added to the positive electrode and/or the negative electrode.

The separator preferably shows low resistance against the migration of ions of the electrolyte and has excellent wettability with the electrolyte.

According to an embodiment of the present disclosure, the separator may include a porous substrate. Any porous substrate used generally for a secondary battery may be used, and porous polymer films may be used alone or in the form of a laminate. For example, a nonwoven web made of high-melting point glass fibers, polyethylene terephthalate fibers, or the like, or a polyolefin-based porous membrane may be used, but the scope of the present disclosure is not limited thereto.

Any porous substrate may be used with no particular limitation, as long as it is a porous substrate used generally for an electrochemical device. For example, the porous substrate may include at least one material selected from the group consisting of: polyolefin, such as polyethylene or polypropylene; polyester, such as polyethylene terephthalate or polybutylene terephthalate; polyamide; polyacetal; polycarbonate; polyimide; polyetherether ketone; polyether sulfone; polyphenylene oxide; polyphenylene sulfide; polyethylene naphthalate; polytetrafluoroethylene; polyvinylidene fluoride; polyvinyl chloride; polyacrylonitrile; cellulose; nylon; poly(p-phenylene benzobisoxazole); and polyarylate.

According to an embodiment of the present disclosure, the thickness of the porous substrate is not particularly limited, but may be 1-100 µm, preferably 5-50 µm.Although the thickness of the porous substrate is not limited to the above-defined range, a thickness excessively smaller than the above-defined lower limit causes degradation of mechanical properties, and thus the separator may be damaged with ease during the use of the battery.

According to an embodiment of the present disclosure, although the average diameter and porosity of the pores present in the porous substrate are not particularly limited, it is preferred that the average diameter and porosity may be 0.001-50 µm and 10-95%, respectively.

According to an embodiment of the present disclosure, the separator may further include a porous coating layer formed on at least one surface of the porous substrate and including inorganic particles and a binder. The inorganic particles and the binder contained in the porous coating layer are not particularly limited, as long as they are used generally for a porous coating layer of a separator. In addition, the method for preparing such a porous coating layer is not limited.

According to an embodiment of the present disclosure, the electrolyte includes a lithium salt as an electrolyte salt and an organic solvent for dissolving the lithium salt.

The lithium salt is not particularly limited, as long as it is used conventionally for an electrolyte of a secondary battery, like LiNO₃ and LiTFSI. Particular examples of the anion of the lithium salt may include at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The organic solvent contained in the electrolyte is not particularly limited, as long as it is a generally used organic solvent. Typical examples of the organic solvent may include at least one selected from the group consisting of propylene carbonate, ethylene carbonate, dimethyl ether (DME), 1,3-dioxolane (DOL), diethyl carbonate, dimethyl carbonate, ethyl methyl carbonate, methyl propyl carbonate, dipropyl carbonate, dimethyl sulfoxide, sulfolane, γ-butyrolactone, propylene sulfite and tetrahydrofuran.

Particularly, among the carbonate-based organic solvents, ethylene carbonate or propylene carbonate, which is a cyclic carbonate, is a high-viscosity organic solvent and can dissociate the lithium salt in the electrolyte well, and thus may be used preferably. When using such a cyclic carbonate in the form of a mixture with a low-viscosity and low-dielectric linear carbonate, such as dimethyl carbonate or diethyl carbonate, at a suitable ratio, it is possible to prepare an electrolyte having high electrical conductivity preferably.

Optionally, the electrolyte used according to the present disclosure may further include additives, such as an overcharge-preventing agent, contained in a conventional electrolyte.

The lithium secondary battery according to an embodiment of the present disclosure may be obtained by interposing a separator between a positive electrode and a negative electrode to form an electrode assembly, introducing the electrode assembly to a pouch-like, cylindrical, prismatic battery casing, or the like, and injecting an electrolyte thereto. In a variant, the lithium secondary battery may be obtained by stacking the electrode assemblies, wetting the electrode assemblies with an electrolyte, and introducing the resultant product to a battery casing, followed by sealing.

### MODE FOR DISCLOSURE

Hereinafter, the present disclosure will be explained in more detail with reference to Examples. However, the following Examples are for illustrative purposes only, and the scope of the present disclosure is not limited thereto.

### Example 1

First, lithium metal foil having a thickness of 50 µm as a first lithium metal layer, a polyethylene porous film having a thickness of 10 µm as a first porous polymer layer, carbon nanotubes having a thickness of 10 µm as a carbonaceous current collector, a polyethylene porous film having a thickness of 10 µm as a second porous polymer layer, and lithium metal foil having a thickness of 50 µm as a second lithium metal layer were prepared and laminated successively, and then the resultant laminate was compressed at 25°C through a pressing (roll pressing) process to obtain a negative electrode. Herein, the first porous polymer layer and the second porous polymer layer were provided with at least one through-hole, the area occupied by the through-hole(s) formed in the first porous polymer layer and the second porous polymer layer was 50% based on the total area of the porous polymer layer, and the through-hole had a diameter of 1.9 cm.

### Comparative Example 1

Lithium metal foil having a thickness of 100 µm was prepared as a negative electrode.

### Comparative Example 2

First, lithium metal foil having a thickness of 50 µm as a first lithium metal layer, a carbon nanotube film having a thickness of 10 µm as a carbonaceous current collector, and lithium metal foil having a thickness of 50 µm as a second lithium metal layer were prepared and laminated successively, and then the resultant laminate was compressed at 25°C through a pressing (roll pressing) process to obtain a negative electrode.

### Example 2

### <Preparation of Negative Electrode>

The same negative electrode as the negative electrode obtained from Example 1 was prepared.

### <Manufacture of Lithium sulfur Battery>

A sulfur-carbon composite including sulfur supported in carbon nanotubes was prepared as a positive electrode active material. Herein, the weight ratio of the carbon nanotubes to sulfur was 1:3. Then, polyacrylic acid (PAA) as a binder and carbon fibers as a conductive material were mixed therewith to prepare a positive electrode slurry. Herein, the weight ratio of the positive electrode active material, the conductive material and the binder was 88:5:7.

The resultant slurry was coated on aluminum foil by using Matis coating device and dried at a temperature of 50°C for 24 hours, and then pressing was carried out to obtain a positive electrode.

As an electrolyte, prepared was a mixed solution containing 0.75 M lithium bis(trifluoromethanesulfonyl)imide (LiTFSI) and 1 wt% of lithium nitrate (LiNO₃) dissolved in an organic solvent including 1,3-dioxolane and dimethyl ether (DOL:DME = 1: 1 (volume ratio)).

The positive electrode and the negative electrode were allowed to face each other, a polyethylene separator having a thickness of 16 µm and a porosity of 46% was interposed between both electrodes, the resultant product was received in a pouch-like battery casing, and the electrolyte was injected thereto to obtain a lithium sulfur battery.

### Comparative Example 3

A lithium sulfur battery was obtained in the same manner as Example 2, except that the negative electrode prepared in Comparative Example 1 was used.

### Test Example 1: Tensile Strength Test

The tensile strength was determined according to ASTM D-412 B.

Each of the electrodes according to Example 1 and Comparative Examples 1 and 2 was formed into a specimen meeting the standard of ASTM D-412 B. Then, the tensile strength test was carried out by using a universal testing machine (UTM) and each specimen with a 100 N load cell.

While applying a strain of 0.01 mm/s, the maximum stress value was measured to obtain the tensile strength. The results are shown in the following Table 1.

**[Table 1]**

| | Tensile strength (MPa) | Elongation length at break (mm) |
|---|---|---|
| Ex. 1 | 15.0 | 1.2 |
| Comp. Ex. 1 | 0.9 | - |
| Comp. Ex. 2 | 27.8 | 0.3 |

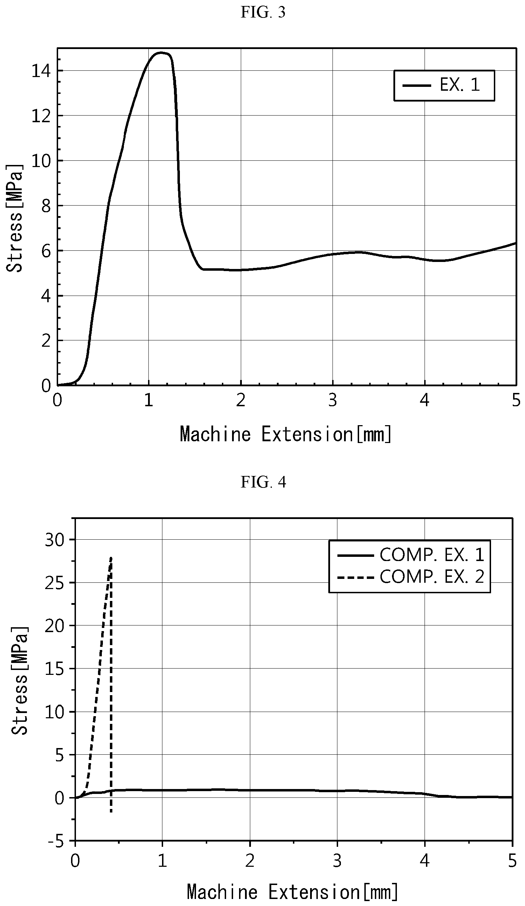

FIG. 3 is a graph illustrating the tensile strength test result of the negative electrode according to Example 1, and FIG. 4 is a graph illustrating the tensile strength test results of the negative electrodes according to Comparative Examples 1 and 2.

Referring to Table 1, FIG. 3 and FIG. 4, it can be seen that Example 1 shows a significant increase in tensile strength as compared to Comparative Example 1. Since the negative electrode according to Comparative Example 1 includes lithium metal foil alone, it has low rigidity and is elongated significantly under the strain. Example 1 shows a significant increase in the elongation length at break, as compared to Comparative Example 2. This is because Example 1 includes a porous polymer layer, and thus has an increased elongation.

### Test Example 2: Capacity Retention Test

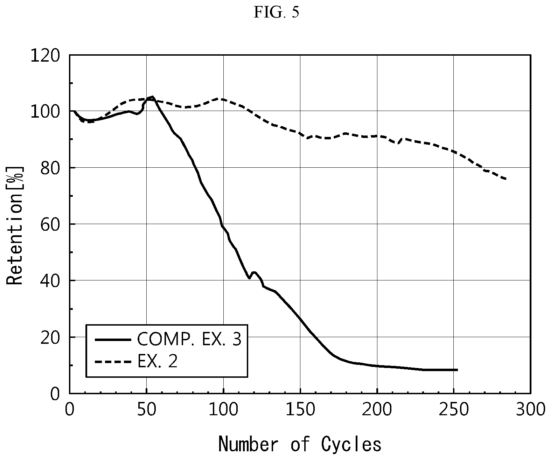

FIG. 5 is a graph illustrating the result of evaluation of the cell performance of the lithium sulfur battery according to each of Example 2 and Comparative Example 3.

The lithium sulfur battery according to each of Example 2 and Comparative Example 3 was charged (0.3 C, constant current (CC) mode) and discharged (0.5 C, CC mode) at 25°C, and the discharge capacity retention was calculated according to the following formula: Discharge capacity retention (%) = [(Discharge capacity at the first cycle - Discharge capacity at the nth cycle) / Discharge capacity at the first cycle] X 100

The lithium sulfur battery according to Example 2 shows a capacity retention of 80% or more even at the 250^{th} cycle, but the lithium sulfur battery according to Comparative Example 3 shows a rapid decrease in capacity retention before the 100^{th} cycle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A negative electrode for a secondary battery, comprising:
a carbonaceous current collector;
a porous polymer layer disposed on at least one surface of the carbonaceous current collector; and
a lithium-based material layer disposed on the top surface of the porous polymer layer.

2. The negative electrode for a secondary battery according to claim 1, wherein the lithium-based material layer comprises at least one of lithium metal and lithium alloys.

3. The negative electrode for a secondary battery according to claim 1, wherein the lithium-based material layer is a lithium metal layer.

4. The negative electrode for a secondary battery according to claim 1, wherein the porous polymer layer has at least one through-hole formed therein, and the carbonaceous current collector and the lithium-based material layer are adhered with each other through the through-hole.

5. The negative electrode for a secondary battery according to claim 4, wherein the through-hole formed in the porous polymer layer occupies an area corresponding to 15-60% based on the total area of the porous polymer layer.

6. The negative electrode for a secondary battery according to claim 4, wherein the through-hole formed in the porous polymer layer has a diameter of 0.5-3 cm.

7. The negative electrode for a secondary battery according to claim 1, wherein the porous polymer layer is disposed on both surfaces of the carbonaceous current collector.

8. The negative electrode for a secondary battery according to claim 1, wherein the carbonaceous current collector has a specific surface area of 50 m²/g or more.

9. The negative electrode for a secondary battery according to claim 1, wherein the carbonaceous current collector has an areal density of 100 g/m² or less.

10. The negative electrode for a secondary battery according to claim 1, wherein the carbonaceous current collector layer comprises graphite, graphene, carbon nanotubes (CNTs), graphite nanofibers (GNFs), carbon nanofibers (CNFs), activated carbon fibers (ACFs), or two or more of them.

11. The negative electrode for a secondary battery according to claim 1, wherein the porous polymer layer comprises polyethylene, polypropylene, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylenenaphthalate, or two or more of them.

12. A method for manufacturing a negative electrode for a secondary battery, comprising the steps of:
stacking a carbonaceous current collector, a porous polymer layer having at least one through-hole on at least one surface of the carbonaceous current collector, and a lithium-based material layer on the top surface of the porous polymer layer to form a laminate; and
compressing the laminate through a pressing process.

13. The method for manufacturing a negative electrode for a secondary battery according to claim 12, wherein the lithium-based material layer comprises at least one of lithium metal and lithium alloys.

14. The method for manufacturing a negative electrode for a secondary battery according to claim 12, wherein the lithium-based material layer is a lithium metal layer.

15. The method for manufacturing a negative electrode for a secondary battery according to claim 12, wherein the compressing step is carried out at a temperature of 180°C or less.

16. The method for manufacturing a negative electrode for a secondary battery according to claim 12, wherein the lithium-based material layer and the carbonaceous current collector are adhered with each other through the through-hole formed in the porous polymer layer, in the compressing step.

17. A secondary battery comprising: a positive electrode; a negative electrode; a separator interposed between the positive electrode and the negative electrode; and an electrolyte, wherein the negative electrode is the negative electrode as defined in any one of claims 1 to 11.
